# DEMANDE DE BREVET EUROPEEN

(11) **EP 4 497 707 A1**
(43) Date de publication de la demande: **29.01.2025**
(21) Numéro de dépôt: 24187926.1
(22) Date de dépôt: 11.07.2024
(51) Int. Cl.: B65G 1/04, F25D 13/00

(54) **VÉHICULE À GUIDAGE AUTOMATIQUE ET SYSTÈME DE RACK CONVENANT POUR UN TEL VÉHICULE**

(30) Priorité: 26.07.2023 FR 2308082
(71) Demandeur: Exotec Product France, 59170 Croix (FR)
(72) Inventeur: MOULIN, Romain, 59800 LILLE (FR); HEITZ, Renaud, 59650 VILLENEUVE D'ASCQ (FR)
(74) Mandataire: Plasseraud IP

(57) **Abrégé**

La présente divulgation est relative à un système de rack pour le stockage de réceptacles configuré pour être opéré par un ou plusieurs véhicules à guidage automatique, comprenant :

- des rayonnages (RY) espacés suivant la première direction (X), dégageant entre eux une allée de circulation (AL1) et s'étendant en longueur suivant une deuxième direction (Y), les rayonnages comprennent chacun une ou plusieurs colonnes d'alvéoles qui présentent des ouvertures d'accès latérales (EA), autorisant le chargement ou déchargement des alvéoles depuis l'allée de circulation,

- une piste de roulement (PST) agencée sur le système de rack, au-dessus desdits rayonnages (RY), configurée pour coopérer avec les moyens de roulement et d'entrainement du véhicule à guidage automatique (V) pour autoriser le déplacement du véhicule suivant la première direction (X) et la deuxième direction (Y), ladite piste de roulement comprenant un ou plusieurs passages (PAS),

- un système de capots (CAP) obturant les rayonnages par le dessus, comprenant des capots amovibles (CAPm), configurés pour fermer de manière amovible ledit ou lesdits passages (PAS).

## Description

La présente divulgation est relative à un véhicule à guidage automatique configuré pour le ramassage de réceptacles d'un système de rack pour le stockage desdits réceptacles.

La présente divulgation est encore relative à un système de rack en tant que tel, configuré pour être opéré par un tel véhicule.

La présente divulgation est encore relative à un ensemble de transport et de stockage comprenant un système de rack selon la présente divulgation et un ou plusieurs à véhicules à guidage automatique selon la présente divulgation, configuré(s) pour charger et décharger des alvéoles du système de rack avec des réceptacles.

### Domaine technique

La présente divulgation concerne plus particulièrement le domaine des systèmes de stockage et de retrait.

De tels systèmes de stockage et de retrait comportent une structure de stockage qui est desservie par un système de transport. Selon une possibilité répandue, le système de transport comprend des véhicules à guidage automatique, configurés pour saisir et déposer des réceptacles dans la structure de stockage. Ces réceptacles contiennent des articles qui sont susceptibles d'être assemblés afin de réaliser des commandes, lesdites commandes étant finalement destinées à quitter l'entrepôt pour être livrées à un client final ou à un distributeur. De tels systèmes de stockage portent le nom de ASRS selon l'acronyme anglo-saxon *"Automated Storage and Retrieval System" (en Français, "Système Automatique de Stockage et de Retrait"*)*.*

### Technique antérieure

L'état de la technique connait, par exemple du document EP 3070027, un premier type d'ASRS comprenant des véhicules téléguidés et un système de stockage comportant une structure de stockage délimitant une pluralité de colonnes d'empilement. Les colonnes d'empilement s'étendent sensiblement à la verticale, et sont juxtaposées les unes par rapport aux autres, suivant deux directions horizontales du volume de stockage.

Une piste de roulement est agencée au-dessus de la structure de stockage et peut comprendre une pluralité de rails de support formant une matrice bidirectionnelle pour le guidage des véhicules selon une première direction et selon une deuxième direction perpendiculaire, toutes les deux horizontales.

Chaque colonne d'empilement est agencée pour recevoir un empilement de réceptacles à partir d'une embouchure supérieure de la colonne. Les différentes embouchures supérieures de la colonne débouchent respectivement, en regard des différentes ouvertures de la matrice.

Les véhicules comprennent chacun un corps de véhicule comprenant un premier ensemble de roulement et un deuxième ensemble de roulement, le premier ensemble et le deuxième ensemble configurés pour circuler, sélectivement, suivant les rails de la matrice, lesdits rails étant orientés suivant la première direction, et suivant les rails de la matrice, sensiblement perpendiculaires, orientés suivant la deuxième direction.

Le corps du véhicule se déplace sensiblement, au niveau de la piste de roulement, jusqu'au-dessus de la piste et donc au-dessus de la structure de stockage, en se déplaçant suivant la première direction ou la deuxième direction, selon les besoins.

Le véhicule comprend encore un système de levage, connecté au corps du véhicule, par exemple par l'intermédiaire de câbles, assurant la montée ou la descente d'un dispositif de préhension de réceptacle, par rapport au corps du véhicule, suivant la direction verticale.

En utilisation, et en vue de charger une colonne d'empilement avec un réceptacle, le véhicule est déplacé au droit de la colonne d'empilement, puis le réceptacle suspendu au dispositif de préhension est descendu par l'embouchure supérieure de la colonne d'empilement sous l'action du système de levage qui assure la descente du réceptacle, jusqu'à ce que ledit réceptacle vienne en appui sur l'empilement des autres réceptacles de la colonne.

Un tel ASRS est performant, s'agissant de la densité de stockage, en ce que le volume de la structure de stockage comprenant les colonnes d'empilement juxtaposées peut être entièrement dédié au stockage de réceptacles, sans volume perdu.

Un tel ASRS reposant sur des colonnes d'empilement de réceptacles présente toutefois pour défaut notable une difficulté d'accès aux réceptacles agencés sur la partie inférieure de la colonne d'empilement. Par exemple si une commande requiert de décharger seulement le premier réceptacle, situé inférieur, dans la colonne d'empilement, cela oblige un travail fastidieux pour lequel les véhicules téléguidés doivent dépiler, successivement, les uns à la suite des autres, l'ensemble des réceptacles se trouvant au-dessus de celui-ci, et selon une séquence de déchargement du réceptacle stocké le plus supérieur, jusqu'au réceptacle, le plus inférieur.

Selon les constatations des inventeurs, une telle solution perd sensiblement en efficacité lorsque la nature des articles stockés dans une même colonne d'empilement est hétérogène, et donc favorisant un tel travail. On peut alors envisager des stratégies particulières de stockage des articles dans le rack, visant à répartir sur les étages les plus élevés les articles qui constituent la majorité des commandes. Cette opération, à la fois longue et complexe, ne constitue même pas une garantie certaine, tant la diversité des commandes peut être importante, ce qui rend inefficace toute stratégie de stockage au préalable. Par ailleurs et selon les constatations des inventeurs, si une telle solution de système de retrait et de stockage selon cette première famille est optimisée s'agissant de la densification du système stockage, une telle densification peut compliquer les opérations de maintenance, si jamais un réceptacle vient à se bloquer dans une colonne d'empilement, notamment en ce qu'un tel système de stockage offre peu de place pour l'intervention d'un opérateur.

L'état de la technique connait encore, du document EP 3638607 B1, une deuxième famille d'ASRS qui comprend, d'une part, des rayonnages sous forme de rack comprenant des alvéoles superposées pour le stockage de réceptacles et, d'autre part, des véhicules (ou chariots motorisés) configurés pour desservir les alvéoles superposées.

À cet effet, le corps du véhicule comprend des moyens de roulage et d'entrainement configurés pour autoriser le déplacement du véhicule, typiquement sur le sol de l'entrepôt, suivant les deux directions horizontales de l'espace.

Les véhicules comprennent encore des moyens de grimpe, typiquement des roues motorisées, dentées, aux quatre coins du corps du véhicule, configurées pour se coupler et engrener avec des éléments de grimpe (i.e une crémaillère ou une chaine à rouleaux) suivant la hauteur des montants du rack pour permettre la montée du véhicule suivant une direction verticale. Une fois à hauteur de l'alvéole, le véhicule comprend une fourche télescopique configurée pour déplacer un réceptacle depuis une position au-dessus du châssis du véhicule, jusqu'à une position en porte-à-faux latéral du châssis pour laquelle le réceptacle est inséré dans ladite alvéole. Une légère descente du véhicule suivant la hauteur du montant assure ensuite la dépose du réceptacle dans l'alvéole, en appui sur deux interfaces mécaniques de soutien du rack.

Selon les constatations des inventeurs, un tel système de stockage selon cette seconde famille peut présenter pour limitation, une plus grande complexité de conception pour des tels véhicules comportant de tels moyens de grimpe, en particulier en ce que ces véhicules doivent pouvoir, en utilisation, supporter leur propre poids ainsi que celui de la charge (ie les réceptacles), lors du cheminement du véhicule à la verticale suivant la hauteur des montants des rayonnages.

On connaît encore du document CN 210 122 322U un autre système de stockage comprenant des rayonnages avec des espaces de stockage de conteneurs, les rayonnages étant séparés pour former des allées. Une piste de roulement comprenant une pluralité de rails est agencée au dessus des rayonnages et des allées pour faire circuler un véhicule selon une première direction et selon une deuxième direction perpendiculaire, toutes les deux horizontales. Le véhicule comprend notamment un système de levage assurant la montée ou la descente dans une allée d'un dispositif d'accès aux conteneurs, le dispositif d'accès étant configuré pour prendre un conteneur d'un espace de stockage ou déposer un conteneur dans un espace de stockage.

Enfin, le document US4088232 décrit un système de stockage comprenant une pluralité de cheminées verticales, chaque cheminée étant entourée par au moins trois colonnes comprenant un empilement d'espaces de stockage de charges. Une pluralité de couvercles disposés au dessus des cheminées et des colonnes forment une surface plane sur laquelle un véhicule de manutention se déplace librement. Le véhicule de manutention comprend un dispositif pour retirer un couvercle d'une cheminée, ainsi qu'un dispositif de levage permettant de monter et descendre une fourche dans cette cheminée. La fourche, une fois à la hauteur d'un espace de stockage, se déplace latéralement dans l'espace de stockage pour prendre ou déposer une charge.

De manière générale, selon les constatations de la Demanderesse, il existe un besoin pour un système ASRS, plus efficient lors des opérations de déchargement par comparaison à la première famille comportant des colonnes d'empilements, et de robustesse améliorée par rapport à un ASRS selon la deuxième famille. Un autre besoin identifié est de stocker des produits frais ou réfrigérés dans de tels système d'ASRS, sans compromettre le fonctionnement des véhicules.

### Résumé

La présente divulgation vient améliorer la situation.

Il est proposé, selon un **premier aspect,** un véhicule à guidage automatique configuré pour la collecte de réceptacles d'un système de rack pour le stockage desdits réceptacles, ledit véhicule comportant :
- un corps de véhicule équipé de moyens d'entrainement et de roulement du véhicule configurés pour assurer le déplacement du véhicule le long d'une première direction et le long d'une deuxième direction perpendiculaire à la première direction, au-dessus des rayonnages du système de rack pendant l'utilisation,
- un dispositif de chargement et déchargement connecté au corps du véhicule et comprenant :
   -- un dispositif de préhension comprenant au moins un support de base équipé d'un moyen de préhension configuré pour saisir ou relâcher un réceptacle
   -- un système de levage comprenant un moyen de montée-descente du dispositif de préhension, configuré pour lever et descendre le support de base du dispositif de préhension et le réceptacle maintenu par le dispositif de préhension, relativement par rapport audit corps de véhicule, selon une troisième direction, verticale. Selon la présente divulgation, ledit dispositif de chargement et déchargement comprend ledit moyen de préhension qui est à déplacement latéral par rapport au support de base configuré pour transférer le réceptacle saisi du support de base au système de rack, ou inversement du système de rack au support de base.

Les caractéristiques du **premier aspect** exposées dans les paragraphes suivants peuvent, optionnellement, être mises en oeuvre, indépendamment les unes des autres ou en combinaison les unes avec les autres :

Le dispositif de préhension comprend le support de base qui est équipé de moyens de guidage, en particulier des galets de guidage ou des patins de guidage, configurés pour assurer un guidage dudit support de base le long de rails verticaux du système de rack de stockage.

Le moyen de préhension à déplacement latéral est pourvu d'un mécanisme à déploiement latéral qui peut comprendre :
- un bras télescopique reliant le moyen de préhension et ledit support de base comprenant au moins un premier segment et un deuxième segment monté en coulissement par rapport au premier segment suivant une direction de coulissement, horizontale,
- un moyen d'actionnement comprenant une transmission reliant le premier segment et le deuxième segment configuré pour déployer le bras télescopique d'une position rétractée entre le premier segment et le deuxième segment pour laquelle ledit moyen de préhension est rétracté par rapport au support de base suivant la direction de coulissement, et jusqu'à une position déployée entre le premier segment et le deuxième segment pour laquelle le moyen de préhension et le réceptacle maintenu sont déployés latéralement par rapport au support de base.

Le bras télescopique peut être configuré pour être :
- déployable de la position rétractée jusqu'à la position déployée qui est une première position déployée dans un premier sens de déploiement du deuxième segment par rapport au premier segment,
- déployable de la position rétractée jusqu'à une deuxième position déployée, dans un deuxième sens de déploiement du deuxième segment par rapport au premier segment.

La transmission peut comprendre une courroie dentée et des poulies de guidage de la courroie comportant au moins une poulie motorisée.

Les moyens de roulement et d'entrainement peuvent comprendre un premier ensemble de moyens de roulement configuré pour assurer le déplacement du véhicule le long d'une première direction dans le système de rack pendant l'utilisation, et un deuxième ensemble de moyens de roulement configuré pour assurer un déplacement du véhicule le long d'une deuxième direction dans le système de rack pendant l'utilisation.

Le véhicule peut présenter des moyens pour déplacer de manière réversible et sélective le premier ensemble des moyens de roulement ou le second ensemble de moyens de roulement à distance d'un support de véhicule sous-jacent, pendant un changement de direction entre la première direction et la seconde direction.

La direction de coulissement du bras télescopique est orientée suivant la première direction, ou orientée suivant la deuxième direction.

Le corps du véhicule peut comporter une cavité agencée de manière centrale à l'intérieur du corps du véhicule, la cavité ayant au moins une ouverture de réception de réceptacle orientée vers les cheminées de circulation, pendant l'utilisation.

Selon un **deuxième aspect,** il est proposé un système de rack pour le stockage de réceptacles configuré pour être opéré par un ou plusieurs véhicules à guidage automatique selon la présente divulgation, comprenant :
- des rayonnages comprenant au moins un ensemble de rayonnage comprenant un premier rayonnage et un deuxième rayonnage agencés l'un par rapport à l'autre suivant une première direction, le premier rayonnage et le deuxième rayonnage s'étendant en longueur suivant une deuxième direction, perpendiculaire à la première direction, le premier rayonnage et le deuxième espacés suivant la première direction, dégageant entre eux une allée de circulation s'étendant en longueur suivant la deuxième direction, entre les deux rayonnages,
   et dans lequel au moins le premier rayonnage et le deuxième rayonnage, comprennent chacun une ou plusieurs colonnes d'alvéoles, les alvéoles de chaque colonne superposées suivant la verticale, lesdites plusieurs colonnes d'alvéoles décalées suivant la deuxième direction, les alvéoles présentent des ouvertures d'accès latérales, autorisant le chargement des alvéoles à partir de réceptacles depuis l'allée de circulation ou au contraire le déchargement de réceptacles contenus dans les alvéoles dans ladite allée de circulation,
- une piste de roulement agencée sur le système de rack, au-dessus desdits rayonnages, ladite piste de roulement configurée pour coopérer avec les moyens de roulement et d'entrainement du véhicule à guidage automatique pour autoriser le déplacement du véhicule au-dessus des rayonnages et au-dessus de ladite allée de circulation suivant la première direction et la deuxième direction dans une position relevée du dispositif de préhension, ladite piste de roulement comprenant un ou plusieurs passages pour le dispositif de préhension, en regard d'une ou plusieurs cheminées de circulation de l'allée de circulation, le ou les passages configurés pour autoriser la descente du dispositif de préhension, sélectivement dans lesdites cheminées de circulation,
   et dans lequel les alvéoles du premier rayonnage et/ou du deuxième rayonnage présentent lesdites ouvertures d'accès latérales autorisant le chargement des alvéoles avec des réceptacles depuis les cheminées de circulation de ladite allée de circulation, à partir d'une première position du moyen de préhension à déplacement latéral pour laquelle le réceptacle est rétracté par rapport au corps de base dans ladite cheminée de circulation jusqu'à une deuxième position pour laquelle le réceptacle est déplacé dans ladite alvéole.

Les caractéristiques du **deuxième aspect** exposées dans les paragraphes suivants peuvent, optionnellement, être mises en oeuvre, indépendamment les unes des autres ou en combinaison les unes avec les autres :

La piste de roulement peut comprendre des premiers rails, orientés selon la première direction, configurés pour le déplacement du véhicule selon ladite première direction et des deuxièmes rails, orientés suivant la deuxième direction, configurés pour le déplacement du véhicule selon la deuxième direction.

Le système de rack peut comprendre un système de capots obturant les rayonnages par le dessus, comprenant des capots amovibles, notamment en coulissement ou en pivot, configurés pour fermer de manière amovible ledit ou lesdits passages.

Les rayonnages, y compris le premier rayonnage et le deuxième rayonnage, peuvent comporter des montants verticaux reliés en eux par un système d'entretoisement, et une pluralité de couples d'interfaces mécaniques qui sont fixées aux montants répartis suivant la hauteur du rack pour former lesdites alvéoles superposées, chaque couple d'interfaces mécaniques comprenant :
- une première interface fixée à au moins deux montants de la structure verticale, en porte-à-faux des deux montants ; s'étendant en longueur suivant la première direction,
- une deuxième interface fixée à au moins deux autres montants de la structure verticale, en porte-à-faux des deux autres montants, s'étendant en longueur suivant la première direction,
   et dans lequel des portions de soutien de la première interface et de la deuxième interface sont orientées l'une vers l'autre en porte-à-faux des montants, suivant la deuxième direction, lesdites portions de soutien configurées pour assurer le soutien d'un réceptacle soutenu par les deux portions de soutien des deux interfaces des deux côtés du réceptacle.

Selon un **troisième aspect,** il est proposé un ensemble de transport et de stockage comprenant un système de rack selon la présente divulgation et un ou plusieurs véhicules à guidage automatique selon la présente divulgation desservant le système de rack.

Le ou les véhicules sont en particulier configurés pour :
- circuler sur la piste de roulement du système de rack suivant la première direction et la deuxième direction, au-dessus des rayonnages et de ladite allée de circulation entre le premier rayonnage et le deuxième rayonnage,
- descendre le support de base et ledit moyen de préhension, dans la première position du moyen de préhension, au travers de l'un des passages de la piste de roulement, dans une des cheminées de circulation verticales appartenant à ladite allée de circulation jusqu'à hauteur de l'une des alvéoles d'un des rayonnages et,
- procéder au chargement de ladite alvéole avec un réceptacle par déplacement latéral du moyen de préhension dans la deuxième position pour laquelle le réceptacle est déployé au travers de l'ouverture d'accès latérale dans ladite alvéole ou encore procéder au déchargement d'un réceptacle stocké dans ladite alvéole par rétraction du moyen de préhension dans la première position.

Les caractéristiques du **troisième aspect** exposées dans les paragraphes suivants peuvent, optionnellement, être mises en oeuvre, indépendamment les unes des autres ou en combinaison les unes avec les autres :

L'ensemble peut comprendre un bras robotisé, en particulier multiaxes, agencé au niveau de la piste de roulement comprenant un préhenseur typiquement pneumatique, ledit bras robotisé configuré pour transférer des articles alimentés par les véhicules à guidage automatique, ledit bras robotisé agencé en une position fixe sur ladite piste, ou encore prévu mobile sur la piste, au moins suivant une direction horizontale, voire selon la première direction et la deuxième direction, par exemple le bras robotisé embarqué sur un véhicule à guidage automatique configuré pour se déplacer suivant la première direction et la deuxième direction.

L'ensemble peut comprendre des réceptacles configurés pour être chargés et déchargés dans les alvéoles du système de rack par le moyen de préhension à déplacement latéral des véhicules et dans lequel tout ou partie des alvéoles du premier rayonnage ou du deuxième rayonnage peuvent être des alvéoles multiples, de profondeur multiple, chaque alvéole multiple configurée pour recevoir au moins deux réceptacles agencés l'un derrière l'autre suivant la première direction , et dans lequel le moyen de préhension à déplacement latéral est configuré pour charger et décharger lesdits au moins deux réceptacles dans ladite alvéole multiple.

Les rayonnages du système de rack reposant au sol, ledit ensemble peut comprendre au moins un ascenseur à réceptacles configuré pour monter les réceptacles depuis le sol jusqu'à la piste de roulement en vue de leur prise par les véhicules à guidage automatique, ou encore configuré pour descendre les réceptacles déchargés par les véhicules, depuis la piste de roulement jusqu'au sol.

### Brève description des dessins

D'autres caractéristiques, détails et avantages apparaîtront à la lecture de la description détaillée ci-après, et à l'analyse des dessins annexés, sur lesquels :
**Fig. 1**

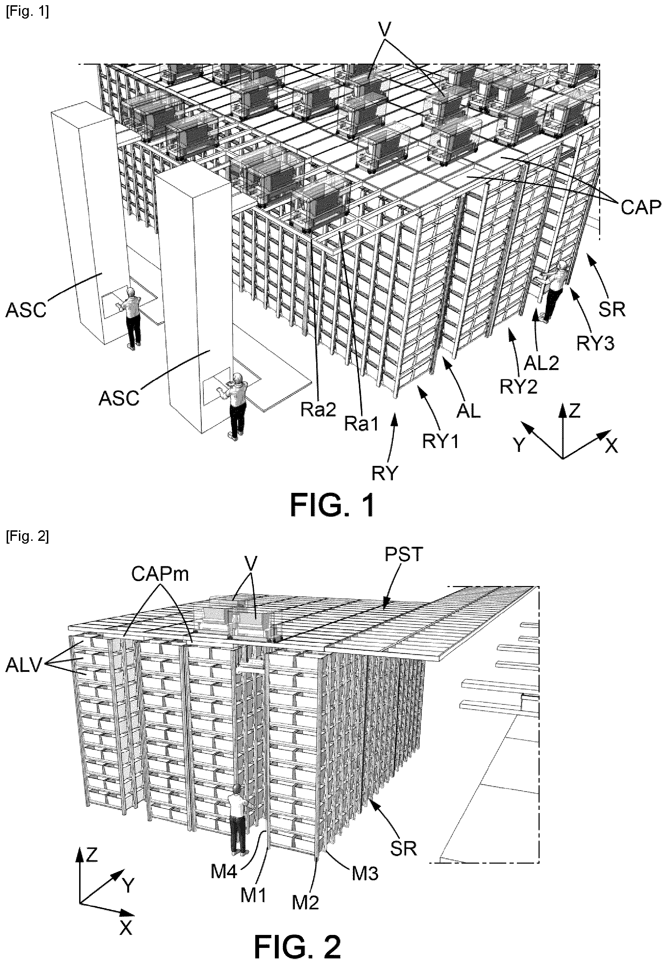

   [Fig. 1] montre un ensemble selon la présente divulgation qui comprend des véhicules à guidage automatique et un système de rack comprenant un premier rayonnage et un deuxième rayonnage séparés par une allée de circulation, le système de rack comprenant une piste de roulement agencée au-dessus des rayonnages, la piste étant configurée pour la circulation des corps des véhicules au-dessus des rayonnages et de ladite allée de maintenance suivant une première direction X et suivant une deuxième direction Y,
**Fig. 2**
   [Fig. 2] est une vue de la figure 1, illustrant un véhicule à guidage automatique dont le corps du véhicule est agencé sur la piste de roulement, à l'aplomb d'une allée de circulation entre deux rayonnages, un dispositif de préhension de réceptacle du véhicule comprenant un support de base étant descendu relativement par rapport au corps du véhicule, par un système de levage, dans une cheminée de circulation appartenant à ladite allée.
**Fig. 3**

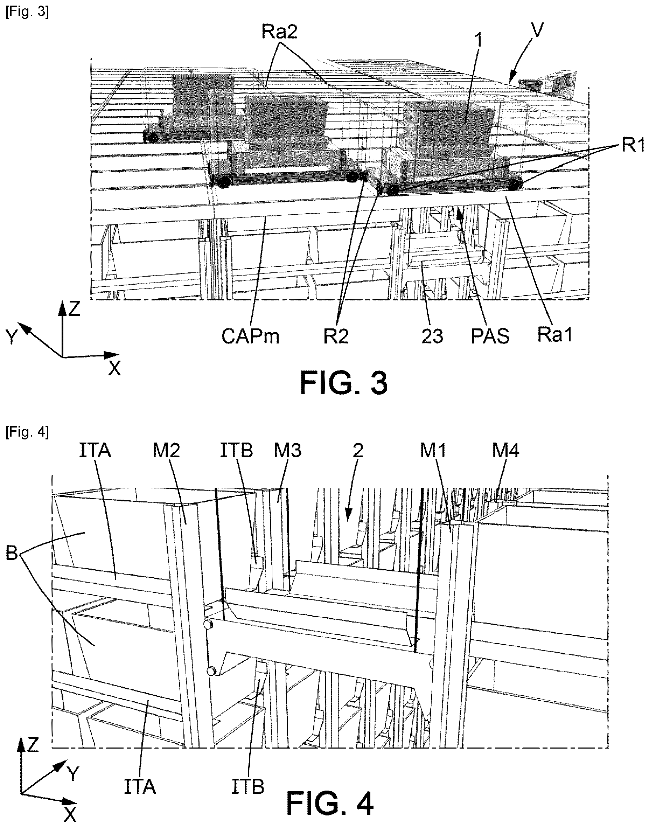

   [Fig. 3] est une vue de détail de la figure 2, illustrant le dispositif de préhension comprenant le support de base, dans la cheminée de circulation, à hauteur, d'une alvéole, de niveau supérieur, ladite alvéole étant une alvéole multiple (double) configurée pour recevoir deux réceptacles, l'un derrière l'autre, suivant la première direction X.
**Fig. 4**
   [Fig. 4] est une vue de détail de la figure 3, illustrant un couple d'interfaces mécaniques configurées pour le soutien d'un réceptacle dans ladite alvéole, le couple comprenant une première interface mécanique, reliant deux montants du rayonnage, suivant la première direction X, et une deuxième interface mécanique, reliant deux autres montants, suivant la première direction X, des portions de soutien de la première interface et de la deuxième interface étant orientées l'une vers l'autre en porte-à-faux des montants, suivant la deuxième direction Y, les deux portions configurées pour assurer le soutien d'un réceptacle soutenu par les deux portions de soutien des deux interfaces des deux côtés du réceptacle.
**Fig. 5**

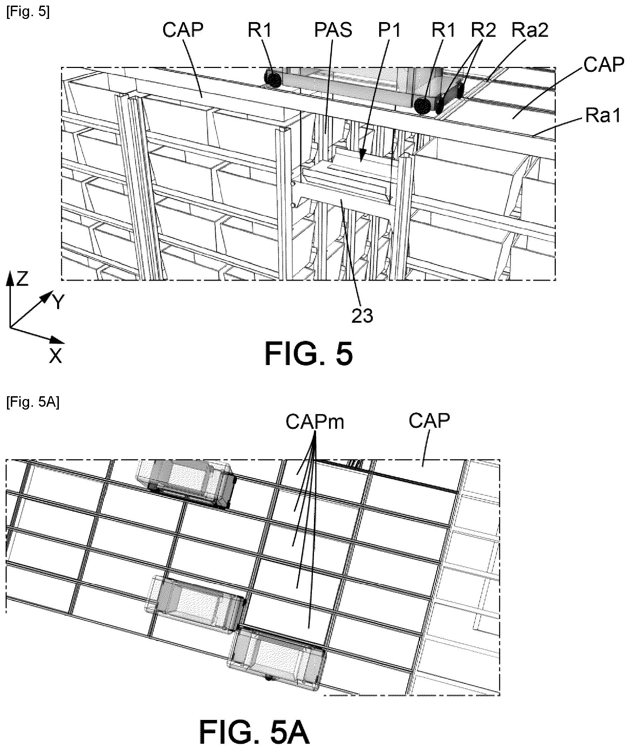

   [Fig. 5] est une vue de détail illustrant sur le corps du véhicule, le premier ensemble de moyens de roulement configuré pour engager avec les premiers rails de la piste de roulement pour assurer le déplacement du corps du véhicule suivant la première direction X, et le deuxième ensemble de roulement configuré pour engager avec les deuxièmes rails de la piste de roulement pour assurer le déplacement du corps du véhicule suivant la deuxième direction Y, ladite piste de roulement comprenant un ensemble de capots formant une couverture, au-dessus des rayonnages, l'un des capots, au-dessus de ladite allée étant escamotée en translation dans une position libérant un passage autorisant la descente du dispositif de préhension au travers dudit passage, depuis la piste, jusque dans la cheminée de l'allée de circulation, en particulier le moyen de préhension étant dans une première position assurant un maintien d'un réceptacle rétracté sur le support de base,
**Fig. 5A**
   [Fig. 5A] est une vue de dessus illustrant la couverture formée par le capotage
**Fig. 6**

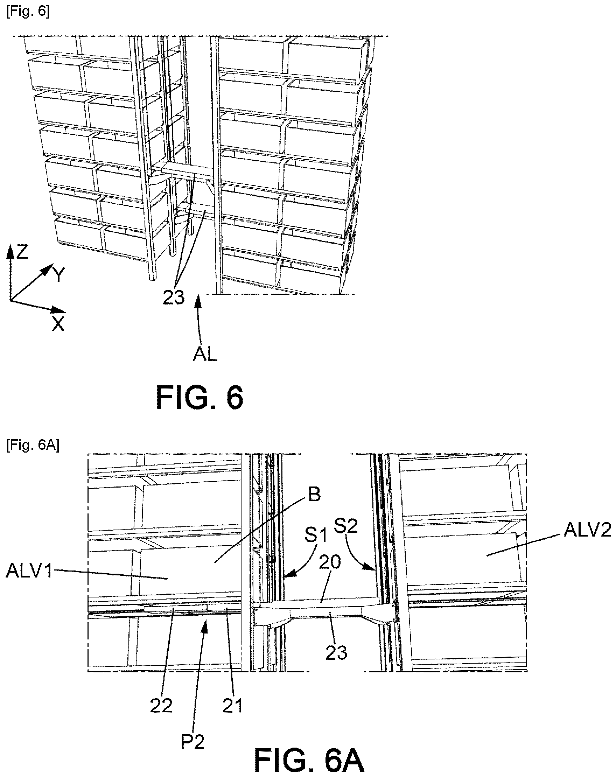

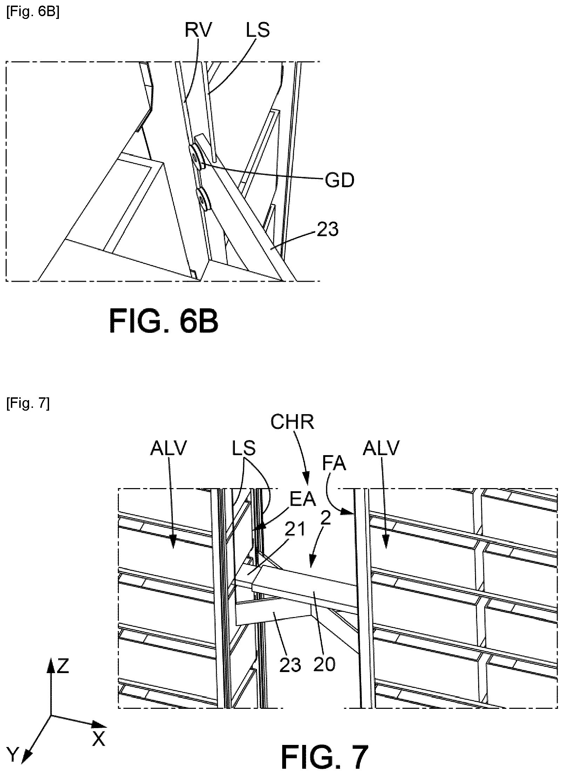

   [Fig. 6] est une vue de détail de l'allée de circulation entre les deux rayonnages, illustrant deux dispositifs de préhension appartenant à deux véhicules à guidage automatique, distincts, les deux dispositifs de préhension descendus respectivement à des hauteurs différentes dans deux cheminées de circulation, les deux cheminées juxtaposées suivant la deuxième direction Y de ladite allée de circulation, les deux cheminées de circulation juxtaposées étant agencées respectivement au droit, suivant la première direction, de deux colonnes d'alvéoles juxtaposées suivant la deuxième direction Y des rayonnages.
**Fig. 6A**
   [Fig. 6A] est une vue de détail de la figure 6 illustrant un moyen de préhension à déplacement latéral depuis une première position jusqu'à une deuxième position, décalée latéralement, pour laquelle le moyen de préhension est déployé latéralement par rapport à un support de base et selon un déplacement horizontal, par l'intermédiaire d'un mécanisme de déploiement latéral comprenant un bras télescopique reliant le moyen de préhension et ledit support de base, le bras télescopique comprenant un premier segment, un deuxième segment monté en coulissement par rapport au premier segment, et un troisième segment monté en coulissement par rapport au deuxième segment, le moyen de préhension pouvant comprendre un doigt en saillie du deuxième segment, configuré pour venir engager avec une empreinte sous le fond du réceptacle.
**Fig. 6B**
   [Fig. 6B] est une vue de détail de la figure 6A.
**Fig. 7**

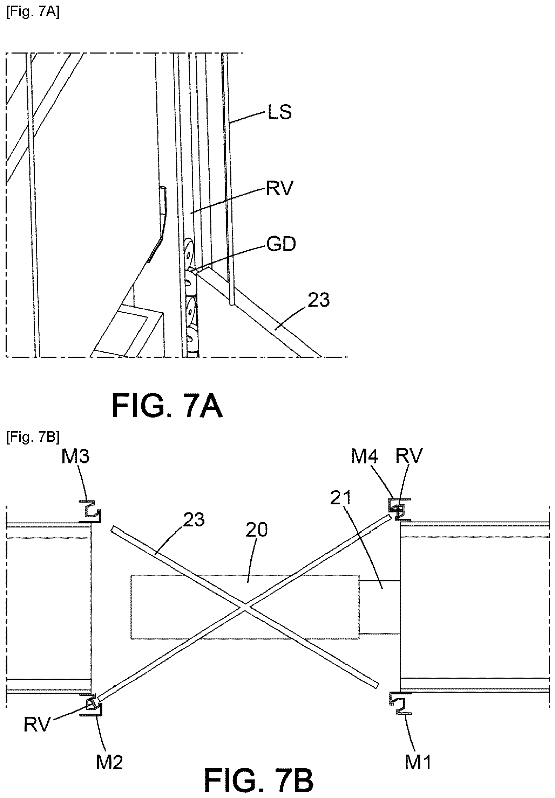

   [Fig. 7] est une vue en perspective de détail de la figure 6 du dispositif de préhension comprenant le support de base, qui est suspendu par des liens souples tels que des câbles du système de levage.
**Fig. 7A**
   [Fig.7A] est une vue des moyens de guidage, comprenant des galets du support de base configurés pour assurer le guidage du support de base long d'un rail vertical le long d'un montant du rayonnage.
**Fig. 7B**
   [Fig. 7B] est une vue d'une possibilité de guidage du support de base comprenant des galets configurés pour être guidés verticalement le long de deux rails verticaux répartis de part et d'autre de ladite allée de circulation.
Fig. 8A

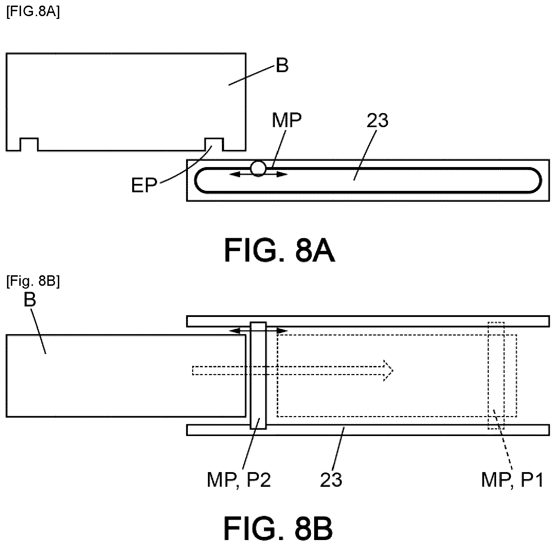

   [Fig. 8A] est vue schématique, de côté, illustrant un mode de réalisation possible du moyen de préhension, qui prend la forme d'un organe d'accrochage, tel qu'une barre d'accrochage configurée pour venir accrocher une partie complémentaire, en particulier concave du réceptacle, et un mécanisme de déplacement latéral de la barre d'accrochage, selon une course limitée suivant la première direction X, dans les limites du support de base, le mécanisme présentant une transmission motorisée, tel qu' au moins une courroie (ou chaine), fermée, et typiquement deux courroies (ou chaine) synchronisées, assurant le déplacement du moyen de préhension de la première position pour laquelle le réceptacle est rétracté sur le support de base jusqu'à la seconde position configurée pour assurer le déploiement latéral du réceptacle par rapport au support de base.
Fig. 8B
   [Fig. 8B] est une vue de dessus du mécanisme de déplacement latéral, illustrant la position du moyen de préhension à titre d'exemple non limitatif sous la forme d'une barre d'accrochage, en trait plein, dans la première position configurée pour assurer le maintien du réceptacle en position rétractée sur le support de base, et en trait pointillé, dans la deuxième position configurée pour assurer un déploiement latéral du réceptacle en porte-à-faux du support de base.

### Description des modes de réalisation

A la figure1, la présente divulgation a pour objet un ensemble de transport et de stockage comprenant un système de rack et un ou plusieurs véhicules à guidage automatique V configurés pour desservir le système de rack. La présente divulgation concerne un tel véhicule à guidage automatique en tant que tel, ainsi qu'un tel système de rack en tant que tel.

Le système de rack pour le stockage de réceptacles est configuré pour être opéré par un ou plusieurs véhicules à guidage automatique. Le système de rack présente des rayonnages RY comprenant au moins un ensemble de rayonnage comprenant un premier rayonnage RY1 et un deuxième rayonnage RY2.

Le premier rayonnage RY1 et le deuxième rayonnage RY2 sont agencés l'un par rapport à l'autre décalés, suivant une première direction X, le premier rayonnage RY1 et le deuxième rayonnage RY2 s'étendant en longueur suivant une deuxième direction Y, perpendiculaire à la première direction X.

Le premier rayonnage RY1 et le deuxième RY2 sont espacés suivant la première direction X, dégageant entre eux une allée de circulation AL s'étendant en longueur suivant la deuxième direction Y entre les deux rayonnages RY1, RY2.

Le premier rayonnage RY1 et le deuxième rayonnage RY2, comprennent chacun une, ou de préférence plusieurs colonnes d'alvéoles. Les alvéoles de chaque colonne sont superposées suivant la direction verticale Z. Les différentes colonnes d'alvéoles sont décalées suivant la deuxième direction Y. Les alvéoles présentent des ouvertures d'accès latérales, EA autorisant le chargement des alvéoles à partir de réceptacles B depuis l'allée de circulation AL, ou au contraire autorisant le déchargement de réceptacles B contenus dans les alvéoles dans ladite allée de circulation.

Les ouvertures d'accès latérales des différentes alvéoles sont indépendantes, de manière à autoriser le chargement et/ou le déchargement des alvéoles indépendamment les unes des autres, voire le chargement et/ou le déchargement en temps masqué, des différentes alvéoles à partir de plusieurs véhicules à guidage automatique.

D'une manière générale, les alvéoles ALV peuvent être des alvéoles simples, en ce sens qu'elles sont de profondeur configurée pour recevoir chacune un unique réceptacle.

De manière avantageuse, les alvéoles peuvent encore être des alvéoles multiples, à savoir de profondeur multiple, chaque alvéole multiple configurée pour recevoir au moins deux réceptacles B agencés l'un derrière l'autre suivant la première direction X, et typiquement deux réceptacles suivant la première direction X, voire plus tels que trois réceptacles, l'un derrière l'autre suivant la première direction X.

Des alvéoles multiples permettent de densifier la capacité de stockage du système, à savoir augmenter le nombre de réceptacles stockés par unité de volume du système de rack, et par comparaison à un même système de stockage comprenant des alvéoles simples, qui nécessitera un volume perdu (pour le stockage) plus important pour les allées de circulation supplémentaires.

Il est encore entendu que le système de rack n'est pas limité à deux rayonnages consistant en le premier rayonnage RY1 et le deuxième rayonnage RY2, à savoir que le système de rack peut comprendre d'autre(s) rayonnages, et par exemple un troisième rayonnage RY3, s'étendant suivant la deuxième direction Y, parallèlement aux deuxièmes et premiers rayonnages RY1, RY2, la troisième rayonnage décalé suivant la première direction par rapport au deuxième rayonnage RY2 par une (deuxième) allée de circulation, s'étendant parallèle à ladite allée de circulation.

Le troisième rayonnage peut comprendre lui-même, une ou plusieurs colonnes d'alvéoles, typiquement autant que les autres rayonnages (c'est à dire que le premier rayonnage RY1 ou le deuxième rayonnage RY2). Le nombre de colonnes d'alvéoles des rayonnages RY1 (ou RY2) est typiquement supérieur à 1 et peut être suivant les besoins de stockage par exemple compris entre 1 et 10, voire plus. Le nombre de rayonnages peut être supérieur à 3.

La structure des rayonnages RY1, RY2, RY3 peuvent comprendre typiquement un ensemble de montant M1, M2, M3, M4, verticaux, les montants répartis suivant la deuxième direction Y, suivant un écartement typiquement constant correspondant à la largeur des alvéoles ALV et suivant la première direction suivant la longueur des alvéoles ALV. Les différents montants sont maintenus entre eux par un système d'entretoisement assurant la tenue de la structure verticale des montants.

La structure des rayonnages comporte encore une pluralité de couples d'interfaces mécaniques qui sont fixées aux montants M1, M2, M3, M4 réparties suivant la hauteur du rayonnage pour former lesdites alvéoles superposées.

Chaque couple d'interfaces mécaniques comprend :
- une première interface ITA fixée à au moins deux montants M1, M2 de la structure verticale, en porte-à-faux des deux montants s'étendant en longueur suivant la première direction X
- une deuxième interface ITB fixée à au moins deux autres montants M3, M4 de la structure verticale, en porte-à-faux des deux autres montants, s'étendant en longueur suivant la première direction.

Des portions de soutien de la première interface ITA et de la deuxième interface ITB sont orientées l'une vers l'autre en porte-à-faux des montants M1, M2, M3, M4, suivant la deuxième direction Y, les portions de soutien configurées pour assurer le soutien d'un réceptacle soutenu par les deux portions de soutien des deux interfaces des deux côtés du réceptacle.

Le système de rack comprend encore une piste de roulement PST, qui est agencée au-dessus des rayonnages RY du système de rack, au-dessus desdits rayonnages RY configurée pour coopérer avec des moyens de roulement et d'entrainement du véhicule à guidage automatique V pour autoriser le déplacement du véhicule au-dessus des rayonnages et au-dessus de ladite allée de circulation suivant la première direction X et la deuxième direction Y. Selon un mode de réalisation, la piste de roulement PST peut comprendre des premiers rails Ra1, orientés selon la première direction X, configurés pour le déplacement du véhicule selon ladite première direction X et des deuxièmes rails Ra2, orientés suivant la deuxième direction Y, configurés pour le déplacement du véhicule selon la deuxième direction Y. Les premiers rails Ra1 et les deuxièmes rails Ra2 forment une matrice bidirectionnelle.

Le véhicule à guidage automatique V selon la présente divulgation est configuré pour la collecte de réceptacles B du système de rack SR, ledit véhicule comportant un corps de véhicule 1 équipé des moyens d'entrainement et de roulement du véhicule configurés pour assurer le déplacement du véhicule le long de la première direction X et le long de la deuxième direction Y perpendiculaire à la première direction X, au sommet d'un système de rack pendant l'utilisation. Les moyens d'entrainement et de roulement sont configurés pour coopérer avec la piste de roulement.

Les moyens de roulement et d'entrainement peuvent comprendre un premier ensemble de moyens de roulement R1 configuré pour assurer le déplacement du véhicule le long d'une première direction dans le système de rack pendant l'utilisation, et un deuxième ensemble de roulement R2 configuré pour assurer un déplacement du véhicule le long d'une deuxième direction Y dans le système de rack pendant l'utilisation.

Le premier ensemble de roulement R1 peut être configuré coopérer avec les premiers rails Ra1 en étant guidé par les premiers rails Ra1 pour assurer le déplacement du véhicule selon la première direction X alors que le deuxième ensemble de roulement R2 peut être configuré pour coopérer avec les deuxièmes rails Ra2 en étant guidé par les deuxièmes rails Ra2 pour assurer le déplacement du véhicule selon la deuxième direction Y de la piste de roulement.

Selon un tel mode de réalisation, le véhicule peut comprendre des moyens pour déplacer de manière réversible et sélective le premier ensemble de moyens de roulement R1 ou le second ensemble de moyens de roulement R2 à distance d'un support de véhicule sous-jacent, pendant un changement de direction entre la première direction X et la seconde direction Y.

Ainsi, lesdits moyens pour déplacer de manière réversible et sélective assurent l'engagement du premier ensemble de moyens de roulement R1 pour assurer le déplacement du corps du véhicule selon les premiers rails Ra1, alors que le deuxième ensemble de moyens de roulement R2 est dégagé des deuxièmes rails Ra2.

Lors du changement de direction, le deuxième ensemble de moyens de roulement R2 est abaissé pour s'engager avec les deuxièmes rails Ra2, puis le premier ensemble de moyens de roulement R1 est relevé pour se dégager des premiers rails R1. Le corps du véhicule est alors déplaçable suivant la direction des premiers rails Ra1. Le changement de direction inverse est obtenu en abaissant le premier ensemble de roulement R1 pour s'engager avec les premiers rails Ra1, puis en relevant les deuxièmes rails Ra2 afin de les dégager des deuxièmes rails Ra2

Selon un autre mode de réalisation (non illustré), la piste de roulement peut être dépourvue de rails. Les moyens de roulement et d'entrainement peuvent comprendre, comme enseigné en soi par le document FR3125515 de la présente demanderesse, au moins trois roues motrices (par exemple trois roues ou quatre roues) destinées à rouler sur le sol, aptes à pivoter d'au moins 90°.

Lesdites roues motrices sont montées sur des dispositifs de pivotement et d'entrainement fixés sur corps véhicule, chacun desdits dispositifs de pivotement et d'entrainement comprenant un moteur d'actionnement de moyens de pivotement d'une roue motrice autour d'un axe vertical, destinés à permettre de faire pivoter une roue motrice autour d'elle-même. Les dispositifs de pivotement, configurés pour faire pivoter de 90° les roues autorisent des changements de direction de véhicule en alignant la direction de roulement des roues avec la direction X ou avec la direction Y, entre deux pivotements, afin de permettre le déplacement du véhicule sur la piste suivant la première direction X et suivant la deuxième direction Y.

Le véhicule à guidage automatique comprend encore un dispositif de chargement et déchargement connecté au corps du véhicule et comprenant :
- un dispositif de préhension 2 comprenant au moins un support de base 23 équipé d'un moyen de préhension MP configuré pour saisir ou relâcher un réceptacle
- un système de levage comprenant un moyen de montée-descente du dispositif de préhension, configuré pour lever et descendre le support de base 23 du dispositif de préhension et le réceptacle maintenu par le dispositif de préhension, relativement par rapport audit corps de véhicule, selon une troisième direction Z, verticale.

Le moyen de préhension MP configuré pour relâcher ou saisir un réceptacle peut comprendre une surface de support (par exemple un support plan) configurée pour venir en soutien par le dessous du réceptacle, et comme illustrée aux figures. Le cas échéant, un ou plusieurs doigts de positionnement en saillie de la surface de support peuvent être configurés pour pénétrer une ou plusieurs cavités correspondantes sur une paroi inférieure du réceptacle. La coopération entre les doigts et les cavités assurent un positionnement maitrisé entre le réceptacle et le moyen de préhension et comme connu en soi par le document EP 3638607 B1 de la présente Demanderesse.

Le moyen de préhension n'est pas limité à une telle coopération notamment par le dessous du réceptacle et peut comprendre tout autre moyen, tel que des crochets, ventouse (pneumatique) susceptible d'assurer la préhension du réceptacle par le dessus.

Le système de levage comprenant le moyen de montée-descente du dispositif de préhension, peut comprendre typiquement au moins une liaison souple LS, typiquement plusieurs liaisons souples LS s'étendant en parallèle, comme des câbles reliant le corps du véhicule au support de base 23 du dispositif de préhension.

Le système de levage peut comprendre en particulier quatre liaisons souples, reliées aux quatre coins du support de base 23. Le système de levage peut comprendre un mécanisme de treuil, motorisé, comprenant un ou plusieurs enrouleurs motorisés, montés sur le corps du véhicule, sur lesquels peuvent s'enrouler ou se dérouler les liaisons souples pour assurer la descente ou la montée du support de base 23.

Le système de levage est configuré pour assurer la montée du support de base 23 jusqu'à une position relevée du dispositif de préhension 2 pour lequel le dispositif de préhension 2 et un réceptacle maintenu par le dispositif de préhension sont positionnés au-dessus de la piste de roulement sur laquelle les moyens de roulement et d'entrainement du corps du véhicule sont configurés pour se déplacer.

Dans cette position relevée, le dispositif de préhension et le réceptacle porté par le dispositif de préhension n'entravent pas le déplacement du véhicule sur la piste : ledit corps du véhicule à guidage automatique peut se déplacer sur la piste de roulement PST, en particulier suivant la première direction X et/ou suivant la deuxième direction Y, et en déplaçant le réceptacle maintenu.

Selon un mode de réalisation, le corps du véhicule peut comporter une cavité CAV agencée de manière centrale à l'intérieur du corps du véhicule, la cavité ayant au moins une ouverture de réception de réceptacle orientée vers les cheminées de circulation, pendant l'utilisation.

Dans ladite position relevée, le réceptacle B porté par le moyen de préhension vient se loger en tout ou partir dans la cavité CAV. Cette cavité peut permettre à la charge (le réceptacle) d'être centrée par rapport aux organes de roulements des moyens de roulement et d'entrainement, en particulier afin de favoriser la stabilité lors des phases d'accélération (positives ou négatives). Selon un autre mode de réalisation, dans la position relevée, le support de base et le réceptacle porté par le moyen de préhension peuvent se retrouver en porte-à-faux latéral par rapport à la portion du corps du véhicule comprenant les moyens de roulement et d'entrainement.

La piste de de roulement comprend encore un ou plusieurs passages PAS pour le dispositif de préhension 2, en regard d'une ou plusieurs cheminées de circulation appartenant à laite allée de circulation. Les différents passages PAS sont configurés pour autoriser la descente du dispositif de préhension 2 (et du réceptacle porté par le dispositif de préhension), sélectivement dans lesdites cheminées de circulation appartenant à ladite allée de circulation. Lesdites cheminées de circulation, sont juxtaposées suivant la deuxième direction Y, s'étendant respectivement en regard des différentes colonnes d'alvéoles des rayonnages, respectivement suivant ladite deuxième direction Y. De manière générale, chaque cheminée de circulation peut être délimitée, par quatre montants appartenant à deux rayonnages de part et d'autre de ladite allée de circulation, et par exemple deux montants appartenant au premier rayonnage RY1, et deux autres montants appartenant au deuxième rayonnage RY2, diamétralement opposés par rapport à ladite allée de circulation.

Lorsque ladite piste comprend les premiers rails Ra1 s'étendant suivant la première direction X et les deuxièmes rails Ra2 s'étendant suivant la deuxième direction Y, formant une matrice de rails, les passages PAS peuvent être formés par les jours entre les rails Ra1 Ra2, s'étendant au-dessus de ladite allée de circulation AL, et respectivement au-dessus des différentes cheminées de circulation.

Les alvéoles ALV du premier rayonnage RY1 et/ou du deuxième rayonnage RY2 présentent lesdites ouvertures d'accès latérales EA et de manière à autoriser le chargement des alvéoles ALV avec des réceptacles B depuis les cheminées de circulation appartement à ladite allée de circulation AL.

À cet effet, ledit dispositif de chargement et déchargement comprend un mécanisme à déplacement latéral (ou à déploiement latéral) configuré pour déplacer le moyen de préhension et le réceptacle saisi par le moyen de préhension, latéralement par rapport au support de base 23.

Selon la présente divulgation, ledit moyen de préhension MP est donc à déplacement latéral par rapport au support de base 23 configuré pour transférer le réceptacle B saisi du support de base 23 au système de rack, selon un premier sens, ou inversement du système de rack au support de base 23, dans un sens deuxième sens.

En particulier le moyen de préhension MP à placement latéral, peut être configuré pour passer d'une première position P1 pour laquelle le réceptacle saisi par le moyen de préhension est rétracté par rapport au support de base 23 jusqu'à une deuxième position P2 du moyen de préhension pour laquelle le réceptacle saisi par le moyen de préhension est déployé latéralement par rapport au support de base 23 au moins selon un déplacement horizontal.

Dans la première position P1, le réceptacle et le support de base 23 sont au moins partiellement en recouvrement, en particulier suivant la première direction X, et en particulier suivant la direction Y, voire totalement en recouvrement.

Dans la deuxième position P2, le réceptacle est déployé en porte-à-faux latéral par rapport au support de base 23, totalement, voire au moins en majeure partie, en particulier suivant la première direction X.

Le moyen de préhension MP à déplacement latéral autorise avantageusement, le chargement des alvéoles ALV avec des réceptacles B depuis les cheminées de circulation appartement à ladite allée de circulation AL, à partir de ladite première position P1 du moyen de préhension pour laquelle le réceptacle est rétracté par rapport au corps de base 23, le réceptacle agencé dans ladite cheminée de circulation jusqu'à ladite deuxième position P2 pour laquelle le réceptacle est déplacé dans ladite alvéole ALV.

Le déplacement latéral du moyen de préhension MP par rapport au support de base 23 peut s'effectuer suivant la première direction X.

Un tel ensemble de transport et de stockage comprend ainsi un système de rack selon la présente divulgation et un ou plusieurs véhicules à guidage automatique V selon la présente divulgation.

En particulier le ou les véhicules sont configuré(s) pour :
- circuler sur la piste de roulement PST du système de rack suivant la première direction X et la deuxième direction Y, au-dessus des rayonnages RY, y compris le premier rayonnage RY1 et le deuxième rayonnage, d'une part, et de ladite allée de circulation AL entre le premier rayonnage RY1 et le deuxième rayonnage RY2, d'autre part,
- descendre le support de base 23 et ledit moyen de préhension, en particulier dans la première position P1 du moyen de préhension MP, au travers de l'un des passages de la piste de roulement PST, dans une des cheminées de circulation verticales appartenant à ladite allée de circulation AL jusqu'à hauteur de l'une des alvéoles d'un des rayonnages RY et,
- procéder au chargement de ladite alvéole ALV avec un réceptacle B par déplacement latéral du moyen de préhension MP dans la deuxième position P2 du moyen de préhension MP pour laquelle le réceptacle est déployé au travers de l'ouverture d'accès latérale EA dans ladite alvéole ALV, ou encore procéder au déchargement d'un réceptacle stocké dans ladite alvéole, par rétractation du moyen de préhension jusqu'à la première position P1.

Un tel ensemble selon la présente divulgation est avantageux par rapport à la première famille de système de stockage et de retrait, telle qu'enseignée par EP 3070027 et reposant sur un système de stockage à colonnes d'empilement, en ce que les différentes alvéoles d'une même colonne sont accessibles, indépendamment les unes des autres, depuis ladite allée de circulation AL, par le moyen de préhension MP à déplacement latéral, grâce aux ouvertures d'accès latérales EA : il est possible de charger ou de décharger l'une quelconque des alvéoles de la colonne d'alvéoles, et de manière indépendante des autres alvéoles de la même colonne.

Un autre avantage est la présence de ladite allée de circulation AL entre les rayonnages RY1/RY2, voire entre les rayonnages RY2/RAY3. Ceci facilite les opérations de maintenance en autorisant la circulation d'un opérateur entre lesdits rayonnages.

Ledit ensemble peut en particulier être équipé d'un dispositif de maintenance (tel qu'une nacelle élévatrice) configuré pour circuler le long de ladite allée de circulation, ledit équipement pourvu :
- d'un corps de base, présentant des moyens de roulement au sol,
- d'une plateforme élévatrice configurée pour travailler en hauteur et,
- d'un mécanisme de levage, par exemple du type télescopique ou à ciseaux, reliant la plateforme élévatrice au corps de base, configuré pour déployer la plateforme en hauteur, ou encore la rétracter dans une position de moindre encombrement vertical. Ledit équipement de maintenance peut être notamment celui décrit dans le document FR2303593 de la présente Demanderesse de stabilité améliorée par guidage sur les montants de ladite allée de maintenance.

Un tel ensemble selon la présente divulgation est encore avantageux par rapport à la deuxième famille de système stockage et de retrait, telle qu'enseignée par EP 3638607 B1, en ce que les corps des véhicules restent lors des opérations de chargement/ déchargement des alvéoles ALV, à hauteur constante, au-dessus de la piste de roulement PST, et donc sans nécessiter au véhicule de soulever leur propre poids pour procéder chargement/déchargement des alvéoles.

Le système de rack peut comprendre un système de capots CAP obturant les rayonnages par le dessus, au niveau de la piste de roulement. Le système de capots forme une couverture, séparant l'atmosphère au-dessus de la piste de roulement, de l'atmosphère interne au-dessous de la piste de roulement PST comprenant les rayonnages. L'atmosphère interne peut être contrôlée, notamment réfrigérée pour la conservation de produits frais, voire pour la conservation de produits surgelés.

Le système capots CAP comprend des capots amovibles CAPm, notamment en coulissement ou en pivot, configurés pour fermer de manière amovible le ou lesdits passages PAS.

Selon un mode de réalisation, le dispositif de préhension 2 comprend le support de base 23 qui est équipé de moyens de guidage GD, en particulier des galets de guidage ou des patins de guidage, configurés pour assurer un guidage dudit support de base 2 le long de rails verticaux RV du système de rack de stockage. Le guidage du support de base 2 peut s'opérer au moins le long d'au moins deux montants des rayonnages, de part et d'autre de l'allée de circulation AM, et en particulier deux des montants délimitant la cheminée de circulation.

Le guidage peut s'opérer sur deux montants uniquement de la cheminée de circulation, et typiquement sur deux montants agencés suivant une diagonale de la cheminée de circulation.

Selon un mode de réalisation, le mécanisme à déplacement latéral (ou à déploiement latéral) peut comprendre :
- un bras télescopique reliant le moyen de préhension et ledit support de base comprenant au moins un premier segment 20 et un deuxième segment 21 monté en coulissement par rapport au premier segment suivant une direction de coulissement, horizontale,
- un moyen d'actionnement comprenant une transmission reliant le premier segment et le deuxième segment configuré pour déployer le bras télescopique d'une position rétractée entre le premier segment 20 et le deuxième segment 21 pour laquelle ledit moyen de préhension et support de base 23 sont rétractés suivant la direction de coulissement dans la première position P1 du moyen de préhension, et jusqu'à une position déployée entre le premier segment 20 et le deuxième segment 21 pour laquelle le moyen de préhension et le réceptacle maintenu sont déployés latéralement par rapport au support de base 23, dans la deuxième position P2 du moyen de préhension, telle qu'illustrée à la figure 6A en particulier.

La transmission peut comprendre une courroie dentée et des poulies de guidage de la courroie comportant au moins une poulie motorisée. La transmission peut encore comprendre une crémaillère, et comme décrit comme art antérieur dans le document FR2304077, ou encore être dépourvue de telle crémaillère comme divulguée par FR2304077.

Le bras télescopique peut comprendre un troisième segment 22, configuré pour être déployé et rétracté par rapport au deuxième segment 21, et de manière synchronisée par rapport à la rétraction/déploiement du deuxième segment 21 par rapport au premier segment 20, et comme enseigné par FR2304077 grâce à une transmission comprenant des poulies et des courroies.

Dans le cas d'alvéole multiple, le moyen de préhension à déplacement latéral est configuré pour charger et décharger lesdits au moins deux réceptacles dans ladite alvéole multiple. Le nombre de segments télescopiques peut être augmenté (à quatre segments voire plus), selon les besoins, pour augmenter la course utile du moyen de préhension à déploiement latéral.

De manière générale, le moyen de préhension à déplacement latéral peut être configuré pour opérer les opérations de chargement ou déchargement, d'un seul côté du support de base 23 pour venirtravailler que d'un seul côté de l'allée de circulation AL, voire encore pour opérer des opérations de chargement ou déchargement, de deux côtés du support de base 23 pour venir travailler des deux côtés de l'allée de maintenance AL.

Ainsi, et selon un mode de réalisation, le bras télescopique peut être configuré pour être :
- déployable de la position rétractée jusqu'à la position déployée qui est une première position déployée dans un premier sens S1 de déploiement du deuxième segment 21 par rapport au premier segment 21,
- déployable de la position rétractée jusqu'à une deuxième position déployée, dans un deuxième sens S2 de déploiement du deuxième segment par rapport au premier segment.

La première position déployée du bras télescopique et la deuxième position déployée du bras télescopique assurent deux dites deuxièmes positions des moyens de préhension, pour lesquelles le réceptacle B peut être déployé latéralement, respectivement des deux côtés du support de base 23.D'une manière générale, le mécanisme à déplacement latéral assurant le déplacement latéral du moyen de préhension ne se limite toutefois pas aux systèmes à bras télescopiques assurant un déploiement latéral du moyen de préhension dans la deuxième position P2, typiquement hors des limites du support de base 23, suivant la première direction X.

Selon un mode de réalisation, illustré à titre indicatif aux figures 8a et 8b, le moyen de préhension MP peut rester dans les limites du support de base 23, en particulier dans la deuxième position P2 et dans la première position P1, voire dans les positions intermédiaires du moyen de préhension entre ces deux positions P1, P2.

Le support de base 23, peut ainsi comprendre un châssis, en particulier sur lequel le réceptacle B peut glisser suivant la première direction X, en particulier sur deux guides latéraux. Le mécanisme de déplacement latéral, motorisé est configuré pour assurer le déplacement du moyen de préhension MP, suivant la première direction X, dans les limites du support de base 23.Le mécanisme motorisé peut comprendre au moins une courroie fermée (ou au moins une chaine) guidée par deux poulies (ou guidée par deux roues dentées) et typiquement deux courroies fermées (ou deux chaines, en parallèle, synchronisées, Le moyen de préhension est solidaire de la courroie ou de la chaine, configuré pour être déplacé suivant la première direction X.

Aux figures 8a et 8b, le moyen de préhension MP peut prendre la forme d'une barre transversale, solidaire par ses deux extrémités respectivement aux deux courroies (ou aux deux chaines). Cette barre est configurée pour venir accrocher le réceptacle en se logeant dans une empreinte EP, telle qu'une gorge débouchant sous le réceptacle B, s'étendant typiquement suivant la deuxième direction Y. Le réceptacle B peut comprendre deux gorges, distinctes, décalées, suivant la première direction et à l'intérieur desquelles la barre d'accrochage peut sélectivement être insérée, selon le sens de déploiement du réceptacle par rapport à l'allée de circulation.

La rotation de ladite au moins une courroie dans un sens (ou de ladite au moins une chaîne) assure le déplacement du moyen de préhension, en particulier de la barre d'accrochage de la première position P1 jusqu'à la deuxième position P2, en particulier lors des opérations de chargement ; la rotation inverse assure le déplacement de la barre d'accrochage dans le sens opposé, de la deuxième position P2 jusqu'à la première position P1, en particulier lors du déchargement.

Selon un mode de réalisation, la barre d'accrochage reliant les deux courroies peut être remplacée par deux organes d'accrochage, synchronisés, indépendants, respectivement solidaires des deux courroies (ou chaines) et configurés pour être déplacés conjointement suivant la première direction X.

Selon un mode de réalisation, ledit ensemble de transport et de stockage peut comprendre un bras robotisé, en particulier multiaxes par exemple six axes ou plus, agencé au niveau de la piste de roulement PST. Le bras robotisé comprend un préhenseur typiquement pneumatique, ledit bras robotisé configuré pour transférer des articles alimentés par les véhicules à guidage automatique.

Le bras robotisé peut être agencé en une position fixe sur ladite piste selon un premier mode de réalisation. Le bras robotisé peut encore être prévu mobile sur la piste au moins suivant une direction horizontale, voire selon la première direction X et la deuxième direction Y ; par exemple le bras robotisé peut être embarqué sur un véhicule à guidage automatique configuré pour se déplacer suivant la première direction X et la deuxième direction Y.

Lors d'une préparation d'une commande comprenant un assemblage d'articles contenus dans plusieurs alvéoles, le bras robotisé peut être opéré pour assembler (totalement ou partiellement) les articles prélevés par plusieurs véhicules à guidage automatique, au niveau de la piste de roulement.

Le procédé de préparation de commande peut comprendre :
- /A/ obtenir une commande contenant au moins un premier article contenu dans un premier réceptacle, et au moins un deuxième article contenu dans un deuxième réceptacle, le premier réceptacle et le deuxième réceptacle stockés dans des alvéoles du système de rack,
- /B/ déplacer un premier véhicule à guidage automatique sur la piste de roulement, jusqu'à l'une des cheminées de circulation, descendre les moyens de préhension jusqu'à hauteur de l'alvéole contenant le premier réceptacle, et commander le moyen de préhension à déplacement latéral pour charger le premier réceptacle sur le support de base, puis remonter le support de base et le réceptacle maintenu par le moyen de préhension, jusqu'au-dessus de la piste de roulement,
- /C/ déplacer un deuxième véhicule à guidage automatique sur la piste de roulement, jusqu'à l'une des cheminées de circulation, descendre les moyens de préhension jusqu'à hauteur de l'alvéole contenant le deuxième réceptacle, et commander le moyen de préhension à déploiement latéral pour charger le deuxième réceptacle sur le support de base, puis remonter le support de base et le réceptacle maintenu par le moyen de préhension, jusqu'au-dessus de la piste de la piste de roulement,
- /D/ déplacer le premier véhicule supportant le premier réceptacle et/ou le deuxième véhicule supportant le deuxième réceptacle dans le champ d'action du bras robotisé au niveau de la piste de roulement, et assembler la commande contenant le premier article et le deuxième article par le bras robotisé.

De manière générale, l'assemblage de la commande peut être opéré totalement ou partiellement au niveau de la piste de roulement PSR. L'ensemble de transport et de stockage peut comprendre une ou plusieurs stations de préparation de commande.

La ou les stations de préparation de commande sont pourvue(s) typiquement au sol sur lequel reposent les rayonnages du système de rack : une station de préparation de commande peut comprendre typiquement une interface utilisateur avec un écran configuré pour afficher les informations sur la commande. Une fois les réceptacles (et articles contenus dans les réceptacles) collectés par les véhicules à guidage automatique, au sommet de la piste de roulement, les différents réceptacles (ou encore un assemblage de commande opéré par le bras robotisé) peuvent être descendus.

Selon un mode, les rayonnages du système de rack reposant au sol, ledit ensemble peut comprendre au moins un ascenseur à réceptacles ASC, ledit ascenseur configuré pour monter les réceptacles depuis le sol jusqu'à la piste de roulement en vue de leur prise par les véhicules à guidage automatique, et/ou encore au moins un ascenseur configuré pour descendre les réceptacles déchargés par les véhicules, depuis la piste de roulement jusqu'au sol.

Selon un autre mode de réalisation (non illustré), les articles (ou la commande partiellement ou totalement assemblée) peuvent être descendus depuis la piste de roulement, par un ou plusieurs véhicules à guidage automatique, en actionnant le support de base et le réceptacle maintenu à la descente le système de stockage peut comprendre typiquement une ou plusieurs cheminées de circulation, en particulier dédiée(s) pour la descente des articles ou de la commande au niveau du sol, en particulier à destination de la station de préparation de commande.

### Liste des signes de référence

- V. Véhicule à guidage automatique,
- 1 Corps de véhicule,
- 2. Dispositif de levage,
- 20. Premier segment,
- 21. Deuxième segment,
- 22. Troisième segment,
- 23. Support de base,
- P1. Première position (du moyen de préhension assurant la rétraction du réceptacle sur le support de base),
- P2. Deuxième position (du moyen de préhension assurant le déploiement latéral du réceptacle par rapport au support de base),
- MP. Moyen de préhension (à déplacement latéral)
- R1, R2. Premier et deuxième ensemble de moyens de roulement,
- GD. Moyens de guidage (support de base),
- LS. Liaisons souples,
- B. Réceptacles,
- SR. Système de rack,
- RY. Rayonnages,
- RY1. RY2, RY3. Premier, deuxième et troisième rayonnage,
- M1, M2, M3, M4. Montants,
- ITA , ITB. Interfaces mécaniques (par exemple équerres),
- ALV. Alvéoles (de stockage du rack),
- ALV1, ALV2. Première et deuxième alvéole,
- RV. Rails verticaux,
- EA. Ouvertures d'accès latérales (alvéoles),
- CHR. Cheminées de circulation,
- CAP. Capot,
- CAPm. Capot mobiles,
- AL Allée de circulation,
- PST. Piste de roulement,
- Ra1. Premiers rails (Piste de roulement),
- Ra2. Deuxièmes rails (Piste de roulement),
- X. Première direction,
- Y. Deuxième direction,
- Z. Troisième direction,
- ASC. Ascenseur,
- MP. Moyen de préhension (à déplacement latéral).

## Revendications

1. Système de rack pour le stockage de réceptacles configuré pour être opéré par un ou plusieurs véhicules à guidage automatique, le ou chaque véhicule étant configuré pour la collecte de réceptacles (B) du système de rack (SR) pour le stockage desdits réceptacles, ledit véhicule comportant :
- un corps de véhicule (1) équipé de moyens d'entrainement et de roulement du véhicule
- un dispositif de chargement et déchargement connecté au corps du véhicule et comprenant :
-- un dispositif de préhension (2) comprenant au moins un support de base (23) équipé d'un moyen de préhension configuré pour saisir ou relâcher un réceptacle
-- un système de levage comprenant un moyen de montée-descente du dispositif de préhension, configuré pour lever et descendre le support de base (23) du dispositif de préhension et le réceptacle maintenu par le dispositif de préhension, relativement par rapport audit corps de véhicule, selon une troisième direction (Z), verticale,
ledit dispositif de chargement et déchargement comprend ledit moyen de préhension (MP) qui est à déplacement latéral par rapport au support de base (23) configuré pour transférer le réceptacle saisi du support de base (23) au système de rack, ou inversement du système de rack au support de base (23),
ledit système de rack comprenant :
- des rayonnages (RY) comprenant au moins un ensemble de rayonnage comprenant un premier rayonnage (RY1) et un deuxième rayonnage (RY2) agencés l'un par rapport à l'autre suivant une première direction (X), le premier rayonnage (RY1) et le deuxième rayonnage (RY2) s'étendant en longueur suivant une deuxième direction (Y), perpendiculaire à la première direction (X), le premier rayonnage (RY1) et le deuxième (RY2) espacés suivant la première direction (X), dégageant entre eux une allée de circulation (AL1) s'étendant en longueur suivant la deuxième direction (Y), entre les deux rayonnages (RY1, RY2),
et dans lequel au moins le premier rayonnage (RY1) et le deuxième rayonnage (RY2), comprennent chacun une ou plusieurs colonnes d'alvéoles, les alvéoles de chaque colonne superposées suivant la verticale, lesdites plusieurs colonnes d'alvéoles décalées suivant la deuxième direction (Y), les alvéoles présentent des ouvertures d'accès latérales (EA), autorisant le chargement des alvéoles à partir de réceptacles depuis l'allée de circulation ou au contraire le déchargement de réceptacles contenus dans les alvéoles dans ladite allée de circulation,
- une piste de roulement (PST) agencée sur le système de rack, au-dessus desdits rayonnages (RY), comprenant des premiers rails (Ra1), orientés selon la première direction (X), configurés pour le déplacement du véhicule selon ladite première direction (X) et des deuxièmes rails (Ra2), orientés suivant la deuxième direction (Y), configurés pour le déplacement du véhicule selon la deuxième direction, ladite piste de roulement configurée pour coopérer avec les moyens de roulement et d'entrainement du véhicule à guidage automatique (V) pour autoriser le déplacement du véhicule au-dessus des rayonnages et au-dessus de ladite allée de circulation suivant la première direction (X) et la deuxième direction (Y) dans une position relevée du dispositif de préhension (2), ladite piste de roulement comprenant un ou plusieurs passages (PAS) pour le dispositif de préhension (2), en regard d'une ou plusieurs cheminées de circulation de l'allée de circulation, le ou les passages configurés pour autoriser la descente du dispositif de préhension (2), sélectivement dans lesdites cheminées de circulation,
- un système de capots (CAP) obturant les rayonnages par le dessus, comprenant des capots amovibles (CAPm), configurés pour fermer de manière amovible ledit ou lesdits passages (PAS), et dans lequel les alvéoles (ALV) du premier rayonnage (RY1) et/ou du deuxième rayonnage (RY2) présentent lesdites ouvertures d'accès latérales (EA) autorisant le chargement des alvéoles (ALV) avec des réceptacles (B) depuis les cheminées de circulation de ladite allée de circulation (AL), à partir d'une première position du moyen de préhension (MP) à déplacement latéral pour laquelle le réceptacle est rétracté par rapport au corps de base (23) dans ladite cheminée de circulation jusqu'à une deuxième position (P2) pour laquelle le réceptacle est déplacé dans ladite alvéole (ALV).

2. Système de rack selon la revendication 1, dans lequel les capots amovibles (CaPm) sont configurés amovibles en pivot ou configurés amovibles en coulissement.

3. Système de rack selon la revendication 1 ou 2, dans lequel les rayonnages (RY), y compris le premier rayonnage (RY1) et le deuxième rayonnage (RY2), comportent des montants verticaux (M1, M2, M3, M4) reliés en eux par un système d'entretoisement, et une pluralité de couples d'interfaces mécaniques qui sont fixées aux montants (M1, M2, M3, M4) répartis suivant la hauteur du rack (RK) pour former lesdites alvéoles (ALV) superposées, chaque couple d'interfaces mécaniques comprenant :
- une première interface (ITA) fixée à au moins deux montants (M1, M2) de la structure verticale, en porte-à-faux des deux montants ; s'étendant en longueur suivant la première direction (X)
- une deuxième interface (ITB) fixée à au moins deux autres montants (M3, M4) de la structure verticale, en porte-à-faux des deux autres montants, s'étendant en longueur suivant la première direction (X)
et dans lequel des portions de soutien de la première interface (ITA) et de la deuxième interface (ITB) sont orientées l'une vers l'autre en porte-à-faux des montants, suivant la deuxième direction (Y), lesdites portions de soutien configurées pour assurer le soutien d'un réceptacle (B) soutenu par les deux portions de soutien des deux interfaces (ITA, ITB) des deux côtés du réceptacle.

4. Ensemble de transport et de stockage comprenant un système de rack selon l'une des revendications 1 à 3 et un ou plusieurs véhicules à guidage automatique (V) comprenant
- le corps de véhicule (1) équipé des moyens d'entrainement et de roulement du véhicule
- le dispositif de chargement et déchargement connecté au corps du véhicule et comprenant :
-- le dispositif de préhension (2) comprenant au moins un support de base (23) équipé du moyen de préhension configuré pour saisir ou relâcher un réceptacle
-- le système de levage comprenant le moyen de montée-descente du dispositif de préhension, configuré pour lever et descendre le support de base (23) du dispositif de préhension et le réceptacle maintenu par le dispositif de préhension, relativement par rapport audit corps de véhicule, selon la troisième direction (Z), verticale,
ledit dispositif de chargement et déchargement comprend ledit moyen de préhension (MP) qui est à déplacement latéral par rapport au support de base (23) configuré pour transférer le réceptacle saisi du support de base (23) au système de rack, ou inversement du système de rack au support de base (23),
le ou les véhicules configurés pour :
- circuler sur la piste de roulement (PST) du système de rack suivant la première direction (X) et la deuxième direction (Y), au-dessus des rayonnages (RY) et de ladite allée de circulation (AL) entre le premier rayonnage (RY1) et le deuxième rayonnage (RY2),
- descendre le support de base (23) et ledit moyen de préhension, dans la première position (P1) du moyen de préhension, au travers de l'un des passages de la piste de roulement (PST), dans une des cheminées de circulation verticales appartenant à ladite allée de circulation (AL) jusqu'à hauteur de l'une des alvéoles d'un des rayonnages (RY) et,
- procéder au chargement de ladite alvéole (ALV) avec un réceptacle (B) par déplacement latéral du moyen de préhension (MP) dans la deuxième position (P2) pour laquelle le réceptacle est déployé au travers de l'ouverture d'accès latérale (EA) dans ladite alvéole (ALV) ou encore procéder au déchargement d'un réceptacle stocké dans ladite alvéole par rétraction du moyen de préhension dans la première position (P1).

5. Ensemble de transport et de stockage selon la revendication 4 comprenant un bras robotisé, en particulier multiaxes, agencé au niveau de la piste de roulement (PST) comprenant un préhenseur typiquement pneumatique, ledit bras robotisé configuré pour transférer des articles alimentés par les véhicules à guidage automatique, ledit bras robotisé agencé en une position fixe sur ladite piste, ou encore prévu mobile sur la piste, au moins suivant une direction horizontale, voire selon la première direction (X) et la deuxième direction (Y), par exemple le bras robotisé embarqué sur un véhicule à guidage automatique configuré pour se déplacer suivant la première direction (X) et la deuxième direction (Y).

6. Ensemble selon la revendication 4 ou 5, comprenant des réceptacles (B) configurés pour être chargés et déchargés dans les alvéoles (ALV) du système de rack par le moyen de préhension à déplacement latéral des véhicules et dans lequel tout ou partie des alvéoles du premier rayonnage (RY1) ou du deuxième rayonnage (RY2) sont des alvéoles multiples, de profondeur multiple, chaque alvéole multiple configurée pour recevoir au moins deux réceptacles (B) agencés l'un derrière l'autre suivant la première direction (X), et dans lequel le moyen de préhension à déplacement latéral est configuré pour charger et décharger lesdits au moins deux réceptacles dans ladite alvéole multiple.

7. Ensemble de transport et de stockage selon l'une des revendications 4 à 6 dans lequel les rayonnages du système de rack reposant au sol, ledit ensemble comprenant au moins un ascenseur à réceptacles (ASC) configuré pour monter les réceptacles depuis le sol jusqu'à la piste de roulement en vue de leur prise par les véhicules à guidage automatique, ou encore configuré pour descendre les réceptacles déchargés par les véhicules, depuis la piste de roulement jusqu'au sol.

8. Ensemble selon l'une des revendications 4 à 7, dans lequel le dispositif de préhension (2) comprend le support de base (23) qui est équipé de moyens de guidage (GD), en particulier des galets de guidage ou des patins de guidage, configurés pour assurer un guidage dudit support de base (23) le long de rails verticaux (RV) du système de rack de stockage.

9. Ensemble selon l'une des revendications 4 à 8, dans lequel le moyen de préhension à déplacement latéral est pourvu d'un mécanisme à déploiement latéral comprenant :
- un bras télescopique reliant le moyen de préhension et ledit support de base comprenant au moins un premier segment (20) et un deuxième segment (21) monté en coulissement par rapport au premier segment suivant une direction de coulissement, horizontale,
- un moyen d'actionnement comprenant une transmission reliant le premier segment et le deuxième segment configuré pour déployer le bras télescopique d'une position rétractée entre le premier segment (20) et le deuxième segment (21) pour laquelle ledit moyen de préhension est rétracté par rapport au support de base (23) suivant la direction de coulissement, et jusqu'à une position déployée entre le premier segment (20) et le deuxième segment (21) pour laquelle le moyen de préhension et le réceptacle maintenu sont déployés latéralement par rapport au support de base (23).

10. Ensemble selon la revendication 9, dans lequel le bras télescopique est configuré pour être :
- déployable de la position rétractée jusqu'à la position déployée qui est une première position déployée dans un premier sens (S1) de déploiement du deuxième segment (21) par rapport au premier segment (21),
- déployable de la position rétractée jusqu'à une deuxième position déployée, dans un deuxième sens (S2) de déploiement du deuxième segment par rapport au premier segment.

11. Ensemble selon la revendication 9 ou 10, dans lequel la transmission comprend une courroie dentée et des poulies de guidage de la courroie comportant au moins une poulie motorisée.

12. Ensemble selon l'une des revendications 4 à 11, dans lequel les moyens de roulement et d'entrainement comprennent un premier ensemble de moyens de roulement (R1) configuré pour assurer le déplacement du véhicule le long de la première direction (X) dans le système de rack pendant l'utilisation, et un deuxième ensemble de moyens de roulement (R2) configuré pour assurer un déplacement du véhicule le long de la deuxième direction (Y) dans le système de rack pendant l'utilisation.

13. Ensemble selon la revendication 12 présentant des moyens pour déplacer de manière réversible et sélective le premier ensemble des moyens de roulement (R1) ou le second ensemble de moyens de roulement (R2) à distance d'un support de véhicule sous-jacent, pendant un changement de direction entre la première direction (X) et la seconde direction (Y).

14. Ensemble selon l'une des revendications 4 à 13, dans lequel la direction de coulissement du bras télescopique est orientée suivant la première direction (X), ou orientée suivant la deuxième direction (Y).

15. Ensemble selon l'une des revendications 4 à 14, dans lequel le corps du véhicule comporte une cavité (CAV) agencée de manière centrale à l'intérieur du corps du véhicule, la cavité ayant au moins une ouverture de réception de réceptacle orientée vers les cheminées de circulation, pendant l'utilisation.

16. Utilisation d'un système de rack selon l'une des revendications 1 à 3, ou d'un ensemble de transport et de stockage selon l'une des revendications 4 à 15, le système de capots (CAP) formant une couverture, séparant l'atmosphère au-dessus de la piste de roulement, de l'atmosphère interne au-dessous de la piste de roulement (PST) comprenant les rayonnages (RY), l'atmosphère interne étant une atmosphère contrôlée, réfrigérée pour la conservation de produits frais, voire pour la conservation de produits surgelés.
